# EUROPÄISCHE PATENTSCHRIFT

(11) **EP 3 652 080 B1**
(45) Veröffentlichungstag und Bekanntmachung des Hinweises auf die Patenterteilung: **24.03.2021**
(21) Anmeldenummer: 18735500.3
(22) Anmeldetag: 26.06.2018
(51) Int. Cl.: B65B 43/50, B65B 3/02, B65B 61/18, B65B 65/02, B29C 65/78

(54) **VERFAHREN UND VORRICHTUNG ZUM APPLIZIEREN VON MITTELS EINER GREIFEINRICHTUNG EINES APPLIKATORS FESTGEHALTENEN, EINEN FLANSCH UND EINE SCHRAUBKAPPE AUFWEISENDEN AUSGIESSELEMENTEN AUF PACKUNGEN**
METHOD AND DEVICE FOR APPLYING SPOUTS ON CONTAINERS THE SPOUTS BEING HELD BY A GRIPPING DEVICE OF AN APPLICATOR AND HAVING A FLANGE AND A SCREW CAP
DISPOSITIF POUR ATTACHER DES BECS VERSEURS COMPRENANTS UN FLANC ET UNE FERMETURE À VIS SUR DES EMBALLAGES, LES BECS VERSEURS ETANTS TENUS PAR UN MOYEN DE PRÉHENSION D'UN APPLICATEUR

(30) Priorität: 10.07.2017 DE 102017115335
(43) Veröffentlichungstag der Anmeldung: 20.05.2020
(73) Patentinhaber: SIG Technology AG, 8212 Neuhausen am Rheinfall (CH)
(72) Erfinder: BÜHRER, Joachim, 79780 Stühlingen (DE); RÜEGG, Martin, 8248 Uhwiesen (CH); WEBER, Daniel, 8207 Schaffhausen (CH)
(74) Vertreter: Cohausz & Florack
(86) Internationale Anmeldenummer: PCT/EP2018/025175
(87) Internationale Veröffentlichungsnummer: WO 2019/011472

(56) Entgegenhaltungen:
- EP-A1- 1 813 533
- WO-A1-2011/083322
- WO-A2-98/36977
- DE-A1- 10 017 609

## Beschreibung

Die Erfindung betrifft ein Verfahren und eine Vorrichtung zum Applizieren von mittels einer Greifeinrichtung eines Applikators festgehaltenen, einen Flansch und eine Schraubkappe aufweisenden Ausgießelementen auf Packungen, insbesondere Karton/Kunststoff-Verbundpackungen für gießfähige Produkte, wobei jedes Ausgießelement der Greifeinrichtung in einer ausgerichteten Lage zugeführt, von Greiferbacken eines Greifers der Greifeinrichtung ergriffen und von dieser mittels seinem Flansch auf eine Packung appliziert und dort angepresst wird.

Wenn vorliegend von "Ausgießelementen" die Rede ist, so sollen darunter nicht nur reine Ausgießelemente verstanden werden, sondern auch wiederverschließbare Öffnungselemente aller Art, welche heutzutage meist gleichzeitig als Ausgießelemente dienen. Der Kürze halber wird in dieser Anmeldung jedoch nur von Ausgießelementen gesprochen.

Karton/Kunststoff-Verbundpackungen sind aus der Praxis in unterschiedlichsten Variationen bekannt. Das Verbundmaterial umfasst wenigstens eine Trägerschicht aus Karton und jeweils außen aufgesiegelte Schichten aus Polyethylen, welches den Karton vor Feuchtigkeit schützt. Für aseptische Füllgüter kann das Verbundmaterial zusätzlich eine Aluminiumschicht enthalten um eine gute Barrierewirkung gegen Gase und auch Licht zu erreichen. Das eigentliche Formen und Befüllen der Verpackung und das anschließende Verschließen zu einer Packung geschieht in einer Verpackungsmaschine, die allgemein auch als FFS-Maschine (Form-, Fill-, Seal-Maschine) bezeichnet wird. Die bekannten Packungen werden entweder aus einzelnen Packungsmantelrohlingen (sog. Zuschnitten) hergestellt oder aus einem Packungslaminat von der Rolle mit Produkt befüllt und versiegelt und erst nach der Packungsfertigung vereinzelt.

Häufig werden die gefüllten und verschlossenen Packungen in einem nachfolgenden Schritt mit Packungshilfsmitteln wie beispielsweise wiederverschließbaren Öffnungs- und Ausgießelementen versehen. Dies geschieht mittels separater Applikatoren, denen die fertigen Packungen einzeln zugeführt werden müssen. Die Applikation erfolgt dabei meist auf eine vorbestimmte Schwächungszone auf dem Packungsgiebel, wie beispielsweise ein sog. "überbeschichtetes Loch", welche auf das jeweils zu applizierende Ausgießelement abgestimmt ist.

Aus der gattungsgemäßen EP 2 376 331 A1 sind ein Verfahren und eine Vorrichtung zum Applizieren von Ausgießelementen auf Packungen mit allen Merkmalen des Oberbegriffs von Patentanspruch 1 bzw. Patentanspruch 8 bekannt. Dabei werden die Ausgießelemente zunächst einzeln an eine Mehrzahl von Greifeinrichtungen eines Applikators übergeben. Die Greifeinrichtungen applizieren bei der bekannten Vorrichtung die Ausgießelemente auf die dazu vorgesehenen Oberflächenabschnitte der Packungen, welche dem Applikator gleichfalls einzeln zugeführt werden. Bei dieser Vorrichtung werden unterschiedliche Kontaktflächen des - zwei unterschiedliche Ebenen aufweisenden - Flansches des Ausgießelements mit unterschiedlichen Presselementen auf die Packungsoberfläche gepresst. Das eigentliche Anpressen erfolgt dabei in mehreren Vorgängen hintereinander. Nach der Applikation der Ausgießelemente werden die Packungen aus dem Applikator entfernt.

Nachteilig an der zuvor beschriebenen Vorrichtung ist es, dass die unterschiedlichen Kontaktflächen des Flansches des Ausgießelements mittels mehrerer einzelner Pressvorgänge auf die vorgesehenen Stellen der Packungsoberfläche gepresst werden, um auf allen Kontaktflächen eine optimale Anpressung zu erreichen. Dazu kommen unterschiedliche Presselemente in mehreren Vorgängen hintereinander zum Einsatz.

Auch bei Ausgießelementen mit einem Flansch in nur einer Ebene ändert sich die Situation beim Applizieren durch die unebenen und jeweils unterschiedlichen Kontaktbereiche der Giebelflächen und verlangt ein individuelles Anpressen in Abhängigkeit der jeweiligen Situation der Giebelfläche jeder Packung.

In der WO2011 083322 sind ein Verfahren und eine Vorrichtung zum Applizieren von Ausgießelementen auf Packungen gezeigt. Die gesamte Greifereinheit mitsamt des Andrückkopfes kann hierbei während der Wartung nach Lösen mehrerer Schrauben verschwenkt werden. Das Verschwenken geschieht hier allerdings um eine einzelne, außerhalb des Ausgießelementes gelegene Achse und der Mittelpunkt der gedachten Klebefläche kann somit nicht unbeweglich im Raum bleiben.

Davon ausgehend liegt der vorliegenden Erfindung die Aufgabe zugrunde, das eingangs genannte Verfahren und eine entsprechende Vorrichtung zum Applizieren von mittels einer Greifeinrichtung eines Applikators festgehaltenen, einen Flansch und eine Schraubkappe aufweisenden Ausgießelementen auf Packungen derart auszugestalten und weiterzubilden, dass beim Applizieren ein situationsangepasstes, individuelles Anpressen der Ausgießelemente auch auf unebene Giebelflächen der Packungen mit gleichmäßig verteilter Kraft in einem einzigen Anpressvorgang erreicht werden kann.

Diese Aufgabe wird bei einem Verfahren mit den Merkmalen des Anspruchs gelöst.

Erfindungsgemäß wird ein sehr exaktes und gleichmäßiges Anpressen der einzelnen Ausgießelemente am Applikationsort auch bei unterschiedlich ausgeformten und nachgiebigen Kontaktflächen auf den Giebelflächen der individuell leicht unterschiedlichen Packungen in nur einem einzigen Anpressvorgang erreicht. Das erfindungsgemäße Applizieren führt zu einer sicheren Verbindung von Ausgießelement und Packung und arbeitet auch bei höheren Maschinengeschwindigkeiten äußerst störungsfrei.

In weiterer Ausgestaltung der Erfindung ist vorgesehen, dass vor dem Andrücken des Flansches des Ausgießelements ein Andrückkopf der Greifeinrichtung entriegelt wird. Auf diese Weise kann sich der Andrückkopf bei seinem Aufsitzen auf dem Packungsgiebel an die jeweilige Giebelfläche optimal anpassen.

Nach einer weiteren bevorzugten Ausführungsform der Erfindung ist der Andrückkopf der Greifeinrichtung nach seiner Entriegelung durch eine sphärische Lagerung um einen vorgegebenen Winkelbereich frei im Raum beweglich und kann sich beim Andrücken der jeweiligen Ausformungen des Packungsgiebels anpassen. Dabei wird bevorzugt die Reibung der Kontaktflächen der sphärischen Lagerung durch ein Luftpolster minimiert.

Eine weitere bevorzugte Ausgestaltung der Erfindung sieht vor, dass der Andrückkopf der Greifeinrichtung (6) zur Arretierung exakt parallel zur Hochachse der Greifeinrichtung (6) ausgerichtet wird. Dies ermöglichst ein kontrolliertes Ergreifen der Ausgießelemente.

Zum Fügen des Ausgießelements mit der Packungsoberfläche wird der Flansch jedes Ausgießelements nach dem Ergreifen von einer Auftragsstation zum Benetzen des Flansches mit einem Klebstoff benetzt. Nach einer alternativen bevorzugten Ausgestaltung ist vorgesehen, dass der Flansch nach dem Ergreifen durch die Greifeinrichtung von einer Aktivierstation zum Aktivieren des Kontaktbereichs des Flansches mittels Wärme, UV-Licht oder dergleichen aktiviert wird.

Die Aufgabe wird ferner durch eine Vorrichtung mit den Merkmalen des unabhängigen Anspruchs 8 gelöst.

Durch diese Gestaltung wird erfindungsgemäß erreicht, dass beim Aufsetzen des Ausgießelementes auf die Packung mittels der Greifeinrichtung einerseits eine optimale Anpassung von Ausgießelement und Packungsoberfläche erreicht werden kann, und dass andererseits der Andrückkopf den Anpressdruck in dieser individuellen Stellung gleichmäßig aufbringen kann. Dadurch werden ein sehr gleichmäßiges Leimauftragsbild und eine sehr gute Verklebung erreicht.

In bevorzugter Ausgestaltung der Erfindung ist der Applikator als Rundläufer ausgebildet, wobei zweckmäßigerweise die Greifeinrichtungen über den Umfang des Applikators gleichmäßig verteilt angeordnet sind.

Unter "Rundläufer" sollen sämtliche Applikatoren verstanden werden, bei denen die Transportbahn der auf dem Applikator transportierten zu applizierenden Ausgießelemente entlang einer Bahn transportiert werden, welche weitestgehend identisch mit der Transportbahn der vom Applikator transportierten Packungen ist. Idealerweise sind darunter also Drehteller zu verstehen, wobei der Begriff Rundläufer jedoch ausdrücklich auch solche Applikatoren umfassen soll, bei denen die Transportbahnen der Ausgießelemente und Packungen von einer runden Form abweichen.

Bevorzugt ist in der Kugelschale ein Ringkanal zum gleichmäßigen Einleiten von Luft zur Reduzierung der Reibung zwischen Kugelkalotte und Kugelschale vorgesehen. Auf diese

Weise kann sich nach dem Entriegeln des Verriegelungselements der Andrückkopf bedingt durch seine sphärische Lagerung in einem gewissen Winkelbereich frei im Raum verschwenken, um sich den unterschiedlichen Ausgestaltungen der Oberflächen der Giebelflächen anzupassen.

Eine weitere Lehre sieht vor, dass der Andrückkopf im oberen Bereich der Kugelkalotte eine umlaufende Schulter aufweist, welche in einem Ringspalt zwischen Kugelschale und einem unter dem Stützblock angeordneten Stützring beweglich gelagert ist und dass dazu auch der Stützring auf seiner Oberseite die Form einer Kugelkalotte aufweist. Diese Formgebung sorgt dafür, dass sich der Andrückkopf stets im gleichen Abstand zu dem darüber befindlichen Stützblock befindet.

Alternativ ist auch eine Lösung mittels Federn, einem Kardangelenk oder einer zweiachsigen Kugelmechanik denkbar um ebenso bei der Raumanpassung den Mittelpunkt der gedachten Klebefläche unbeweglich zu belassen.

Nach einer weiteren Lehre der Erfindung sind die Greiferbacken zum Ausgießelement hin angefast ausgebildet. Im Zusammenspiel mit dem zuvor beschriebenen sich nach unten konisch verjüngenden Druckrings des Andrückkopfes sorgt der Druck, welcher zunächst auf die Greiferbacken aufgebracht wird unmittelbar für einen gleichmäßigen Anpressdruck auf den Flansch des Ausgießelements.

Eine weitere bevorzugte Ausbildung der Erfindung sieht vor, dass der Andrückkopf mittels einer Arretiereinrichtung in einer zentrierten Lage feststellbar ausgebildet ist. Ferner weist die Arretiereinrichtung dazu ein in einen Hohlraum des Andrückkopfes hineinragendes Verriegelungselement auf, welches sich nach unten konisch verbreitert und verjüngt sich der Hohlraum im Andrückkopf korrespondierend nach oben hin. Bei einer Betätigung des Verriegelungselements richtet sich der Andrückkopf durch die korrespondierenden konischen Flächen stets in Richtung der Hochachse der Greifeinrichtung aus. Dadurch wird die Unterseite des Andrückkopfes stets parallel zur Ebene der Greiferbacken ausgerichtet und in dieser Lage verkeilt. Gemäß einer weiteren Lehre der Erfindung ist das Verriegelungselement mittels eines Stößels von seiner arretierten Stellung in eine entriegelte Stellung verschiebbar, um die freie Schwenkbarkeit des Andrückkopfes zu gewährleisten.

Dazu ist als Stößel bevorzugt ein in einem Grundkörper der Greifeinrichtung axial verschiebbarer Innenstößel zur Arretierung bzw. zur Entriegelung des Andrückkopfes vorgesehen. Der Innenstößel ist dabei bevorzugt in einem Hohlstößel verschiebbar gelagert und der Hohlstößel ist fest mit dem Stützblock verbunden.

Eine weitere bevorzugte Ausgestaltung der Erfindung sieht vor, dass auch der Hohlstößel im Grundkörper axial verschiebbar gelagert ist und so relativ zum Innenstößel axial verschiebbar ausgeführt ist.

Zur Betätigung der beiden Stößel kann ein Betätigungsarm vorgesehen sein, der fest mit dem Innenstößel verbunden ist. Zweckmäßigerweise ist dabei der Hohlstößel zur Verdrehsicherung relativ zum Innenstößel axial bewegbar ausgeführt, wobei die Bewegung durch einen fest am Innenstößel befestigten und senkrecht zu dessen Längsachse angeordneten Stift und zugehörige Langlöcher im Hohlstößel verhindert wird.

Eine weitere erfindungsgemäße Lehre sieht vor, dass der Hohlstößel gegen den Betätigungsarm federbelastet vorgespannt ist, wobei die Vorspannung zwischen Hohlstößel und Betätigungsarm mittels einer Druckfeder aufgebracht werden kann.

Ein von den Greiferbacken der Greifeinrichtung festgehaltenes Ausgießelement wird, nachdem die Unterseite seines Flansches mit einem Klebstoff oder dergleichen benetzt worden ist, durch die Greifeinrichtung auf die vorgesehene Stelle der Giebelfläche einer Packung aufgesetzt, dabei wird beim ersten Aufsetzen ein gleichmäßiges Leimauftragsbild erzeugt. Etwaige Unebenheiten in der Packungsoberfläche und/oder beim Ausgießelement werden nach Öffnen der Greiferbacken dadurch ausgeglichen, dass der Andrückkopf nunmehr unmittelbar auf die Schraubkappe einwirkt. Nach dem Entriegeln des Verriegelungselements kann sich dazu der Andrückkopf auf die jeweilige Situation einstellen, indem dieser durch seine sphärische Lagerung in vorgegebenen Grenzen frei beweglich ist. Auf diese Weise wird ein zuverlässiges und dennoch individuelles Applizieren der Ausgießelemente auf ihren jeweiligen Bestimmungsort erreicht.

Nachfolgend wird die Erfindung anhand einer lediglich ein bevorzugtes Ausführungsbeispiel darstellenden Zeichnung näher erläutert. In der Zeichnung zeigen
- Fig. 1: eine erfindungsgemäße Vorrichtung in Draufsicht,
- Fig. 2: die erfindungsgemäße Vorrichtung aus Fig. 1 im Vertikalschnitt entlang der Linie II-II in Fig. 1,
- Fig. 3: einen Teil der erfindungsgemäßen Vorrichtung mit einer Zuführschiene und einem Transportband für Ausgießelemente und mit zwei Greifeinrichtungen,
- Fig. 4: die Greifeinrichtungen und die Zuführschiene aus Fig. 3 in perspektivischer Darstellung,
- Fig. 5: eine einzelne Greifeinrichtung aus Fig. 3 in perspektivischer Darstellung,
- Fig. 6: die Greifeinrichtung aus Fig. 5 in Seitenansicht,
- Fig. 7: die Greifeinrichtung im Vertikalschnitt entlang der Linie VII - VII in Fig. 5,
- Fig. 8A und 8B: die Greifeinrichtung im Vertikalschnitt entlang der Linie VIII - VIII in Fig. 5 in arretierter und in unverriegelter Position,
- Fig. 9A und 9B: einen Greifer der Greifeinrichtung aus Fig. 5 in unterschiedlichen Stellungen in perspektivischer Darstellung,
- Fig. 10A und 10B: den unteren Teil der Greifeinrichtungen aus Fig. 8A bzw. 8B in vergrößerter Darstellung und
- Fig. 11: eine schematische Darstellung der Bewegungsbahn der Greifeinrichtungen beim Aufnahme- und Appliziervorgang der Ausgießelemente.

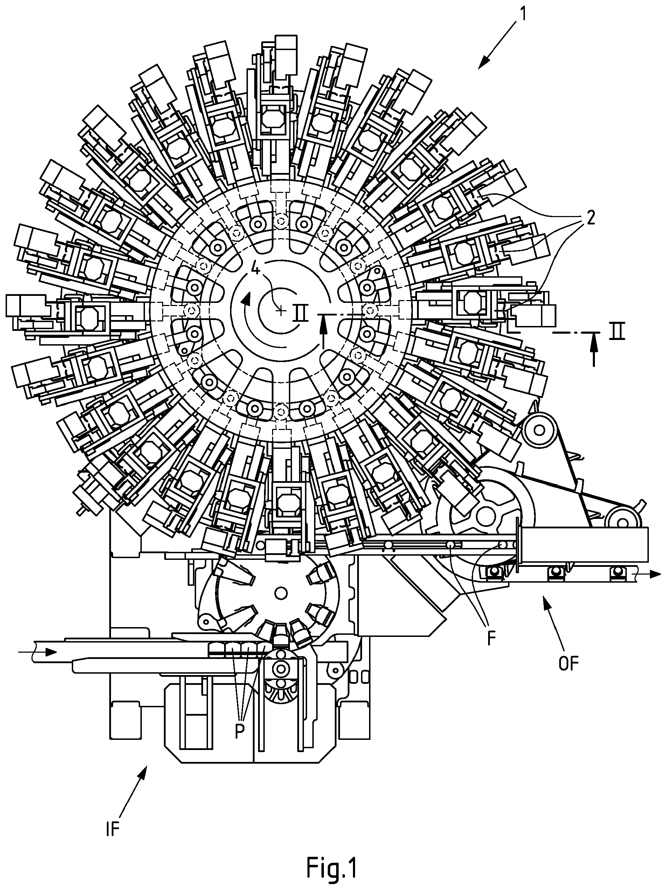

In Fig. 1 ist die erfindungsgemäße Vorrichtung in Draufsicht dargestellt. Sie besteht im Wesentlichen aus einem Applikator 1 und einer Zuführeinrichtung IF, mit der in Richtung des in der Zeichnung linken Pfeils zugeführte aufrecht stehende gefüllte und versiegelte Packungen P vereinzelt und den einzelnen Positionen in Transporteinheiten 2 des Applikators 1 zugeführt werden. Gleichzeitig werden Ausgießelemente F an den Applikator 1 übergeben, um von diesem auf die Packungen P appliziert zu werden. Nachdem die Ausgießelemente F auf die Packungen P appliziert worden sind, werden die Packungen P in einer Ausschleuseinrichtung OF wieder aus den Transporteinheiten 2 des Applikators 1 entfernt und ihrer weiteren Verwendung zugeführt. Dazu verlassen sie die erfindungsgemäße Vorrichtung in Richtung des Pfeils am rechten Rand der Ausschleuseinrichtung OF. Die Drehrichtung verläuft, vorgegeben durch die Anordnung von Zuführeinrichtung IF und Ausschleuseinrichtung OF der Packungen P, im Ausführungsbeispiel im Uhrzeigersinn, dargestellt von einem mittigen Pfeil in Fig. 1.

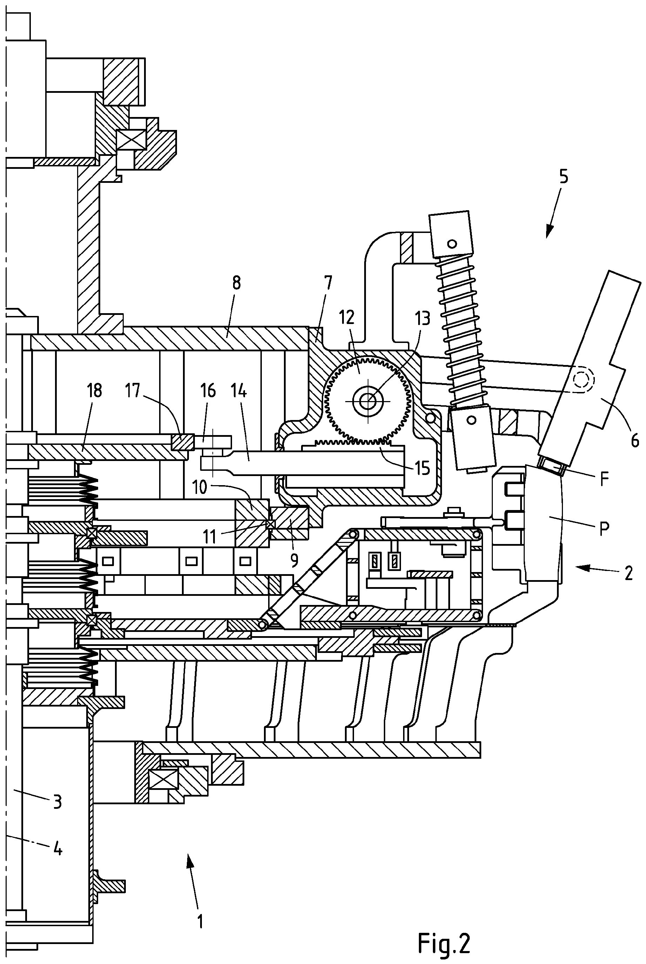

Fig. 2 zeigt die erfindungsgemäße Vorrichtung aus Fig. 1 im Vertikalschnitt entlang der Linie II - II in Fig. 1. Zur besseren Darstellung ist lediglich eine Hälfte des Applikators 1 dargestellt. Man erkennt, dass der Applikator 1 von einer vertikalen Antriebswelle 3 um eine Drehachse 4 angetrieben wird. Der Antrieb des Applikators 1 kann jedoch auch indirekt erfolgen.

Der als Rundläufer ausgebildete Applikator 1 weist in dem in Fig. 1 dargestellten und insofern bevorzugten Ausführungsbeispiel vierundzwanzig Transporteinheiten 2 und entsprechend auch vierundzwanzig Appliziereinheiten 5 auf, welche über den Transporteinheiten 2 angeordnet sind. Jede Appliziereinheit 5 verfügt über eine Greifeinrichtung 6, um jeweils ein zu applizierendes Ausgießelement F aufzunehmen. Die Ausgießelemente F werden von den Greifelementen 6 nach entsprechender Aufbringung eines Fügemittels auf die bezogen auf den Applikator 1 nach außen geneigten Giebelflächen der Packungen P appliziert und dort bis zur Trocknung bzw. Aushärtung angepresst.

Fig. 2 zeigt die Appliziereinheit 5 in ihrer Applizierstellung, in der die Greifeinrichtung 6 das aufgenommene Ausgießelement F auf die Giebelfläche der in der Transporteinheit 2 eingespannten Packung P presst. Erfindungsgemäß ist die Greifeinrichtung 6 mittels eines Viergelenkgetriebes, auf das später noch detailliert eingegangen wird, an der Appliziereinheit 5 angeordnet.

Im dargestellten Ausführungsbeispiel verfügt jede Appliziereinheit 5 über ein Gehäuse 7, welches oben an einer im oberen Bereich des Applikators 1 angeordneten Tragscheibe 8 befestigt ist, wobei die Tragscheibe 8 mit der Antriebswelle 3 des Applikators 1 im dargestellten und insofern bevorzugten Ausführungsbeispiel drehfest verbunden ist. Unten stützt sich das Gehäuse 7 an einem Drehring 9 ab, welcher koaxial um einen Stützring 10 des Applikators 1 angeordnet ist. Der Stützring 10 ist mit einer Verstelleinrichtung zur Justierung der Transporteinheiten 2 verbunden. Wie weiter unten näher erläutert wird, sind sowohl der Drehring 9 als auch der Stützring 10 zweiteilig ausgebildet und umgreifen so ein gemeinsames Lager 11. Auf diese Weise lässt sich die Position der Greifeinrichtung 6 in Umfangsrichtung bezogen auf die Position der darunter befindlichen Transporteinheit 2 in vorgegebenen Grenzen verändern, um das zu applizierende Ausgießelement F optimal auf seinen Aufbringungsort auf dem Packungsgiebel auszurichten.

Im Inneren des Gehäuses 7 erkennt man ein Zahnrad 12, welches um eine horizontal verlaufende Drehachse 13 drehbar ist. Die im unteren Bereich des Zahnrads 12 befindlichen Zähne greifen in die Zähne einer auf einer Steuerstange 14 fest angeordneten Zahnstange 15. Das freie Ende der Steuerstange 14 verfügt über eine drehbar angeordnete Steuerrolle 16, welche an einer Steuerkurve 17 abrollt. Die Steuerkurve 17 ist auf einer - ortsfesten - Tragscheibe 18 des Applikators 1 befestigt. Damit die Steuerrolle 16 stets in festem Kontakt auf der Steuerkurve 17 abrollt, ist die Appliziereinheit 5 durch eine nicht näher bezeichnete Feder, welche über das Zahnrad 12 mittelbar auf die Steuerstange 14 einwirkt, federbelastet ausgeführt.

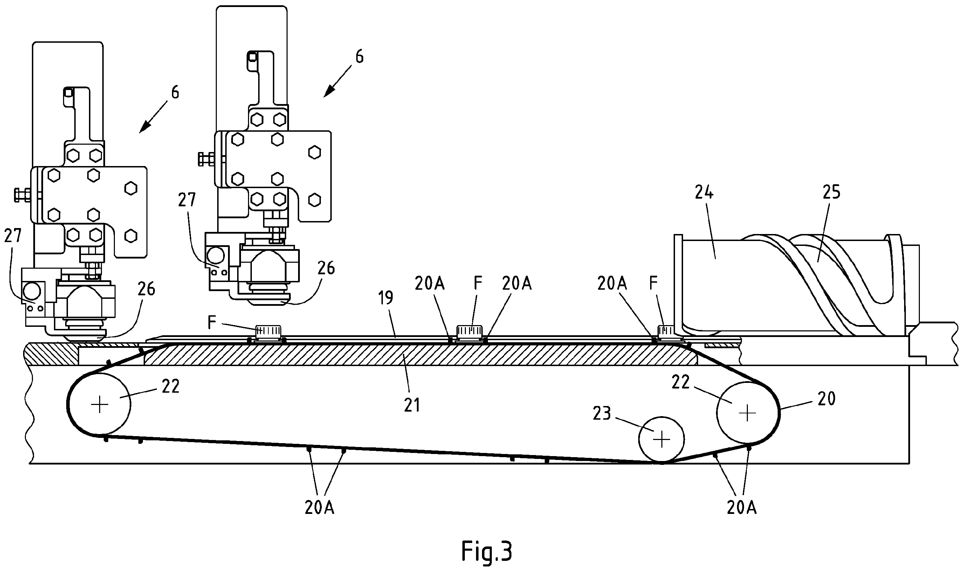

Fig. 3 zeigt einen Vertikalschnitt im Bereich der als Schneckenförderer 24 ausgebildeten Vereinzelungseinrichtung der erfindungsgemäßen Vorrichtung. Man erkennt, dass der zylindrische Aufbau des Schneckenförderers 24 ein eine Mitnehmernut 25 bildendes Schneckengewinde aufweist, so dass jeweils ein Ausgießelement F in der Mitnehmernut 25 transportiert und an der richtigen Stelle auf ein von Führungsschienen 19 seitlich begrenztes Nockenband 20 übergeben werden, welches im entsprechenden Abstand jeweils ein Paar von senkrecht zur Transportrichtung nach außen vorstehenden Nocken 20A aufweist, in denen das Ausgießelement F an den Übergabebereich transportiert wird, wo es an die Greifeinrichtung 6 des Applikators A übergeben wird. Das Nockenband 20 wird im Bereich seines Kontakts mit den Ausgießelementen F über eine Gleitschiene 21 geführt und ist um Umlenkrollen 22 und eine Spannrolle 23 geführt. Jede Greifeinrichtung 6 weist an ihrem unteren Ende im dargestellten und insoweit bevorzugten Ausführungsbeispiel zwei Greiferbacken 26 und ein Antriebsgehäuse 27 auf, die nachfolgend noch näher beschrieben werden.

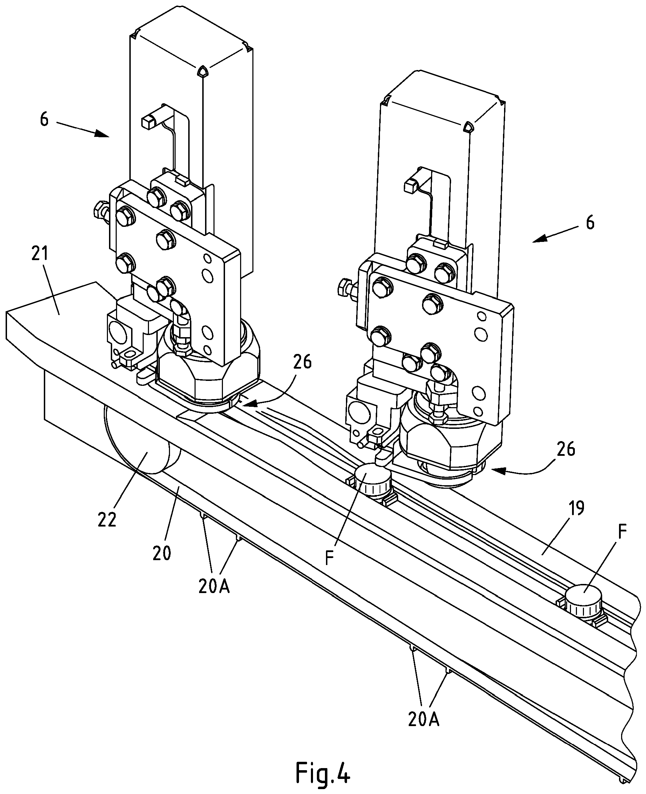

Aus Fig. 4 ist die Übergabe der Ausgießelemente F an die Greifeinrichtungen 6 besonders deutlich zu erkennen. Da die Greifeinrichtungen 6 außen an dem als Rundläufer ausgebildeten (nicht dargestellten) Applikator 1 angeordnet sind, bewegen diese sich auf einer Kreisbahn, während die Ausgießelemente F sich dem Übergabebereich, wie zuvor zur Fig. 3 ausgeführt, linear nähern. Um hier eine besonders zuverlässige Übergabe zu erreichen, ist aus Fig. 4 ersichtlich, dass die seitlichen Führungen 19 kurz vor ihrem Ende die Führungsbahn zum (nicht dargestellten) Applikator hin auslenken bis die Ausgießelemente F exakt auf der Kreisbahn der Greifeinrichtungen 6 angekommen sind und dann von den Führungsschienen 19 bis zu deren Ende genau entlang dieser Kreisbahn geführt werden. Dazu ist der lichte Abstand zwischen zwei Mitnehmernocken 20A etwas größer als der Flansch des Ausgießelements F, so dass dieses sich senkrecht zur Transportrichtung des Nockenbandes 20 im Bereich der ausgelenkten Führungsschiene 19 frei bewegen kann.

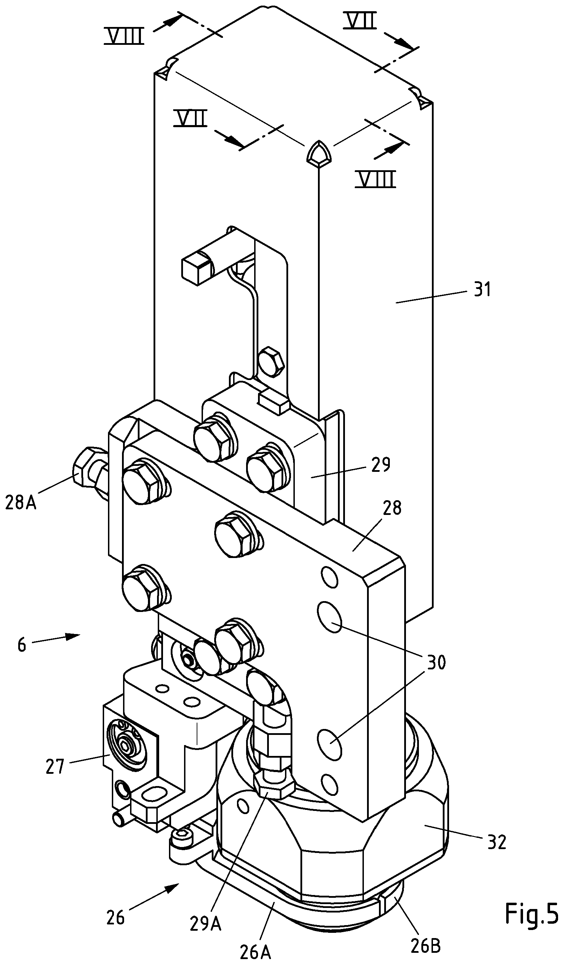

In Fig. 5 ist nun eine einzelne Greifeinrichtung 6 in perspektivischer Darstellung wiedergegeben. Zur Verbindung mit dem Applikator 1 über eine (nicht dargestellte) Verstelleinheit weist die Greifeinrichtung 6 eine horizontale Justierplatte 28 und eine vertikale Justierplatte 29 auf. Auf diese Weise ist es möglich, die Greifeinrichtung 6, welche über Schrauben in den Bohrungen 30 mit der Verstelleinrichtung des Applikators verbunden ist, in ihrer endgültigen Position zu justieren. Dazu weist die horizontale Justierplatte 28 eine Justierschraube 28A und vier nicht näher bezeichnete horizontal ausgerichtete Langlöcher auf, in denen vier gleichfalls nicht näher bezeichnete Schrauben zur Verbindung mit der vertikalen Justierplatte 29 sorgen. Auch diese weist eine entsprechende Justierschraube 29A und, diesmal vertikal verlaufende, nicht näher bezeichnete Langlöcher auf, in denen nicht näher bezeichnete Schrauben für die Verbindung mit der eigentlichen Greifeinrichtung 6 dienen. Nach der Feinjustierung durch die Justierschrauben 28A und 29A sorgt eine feste Verschraubung der Justierplatten untereinander und mit der eigentlichen Greifeinrichtung 6 für deren feste Verbindung mit der (nicht dargestellten) Verstelleinheit. Das Innere der Greifeinrichtung 6 ist dabei von einem Gehäuse 31 geschützt.

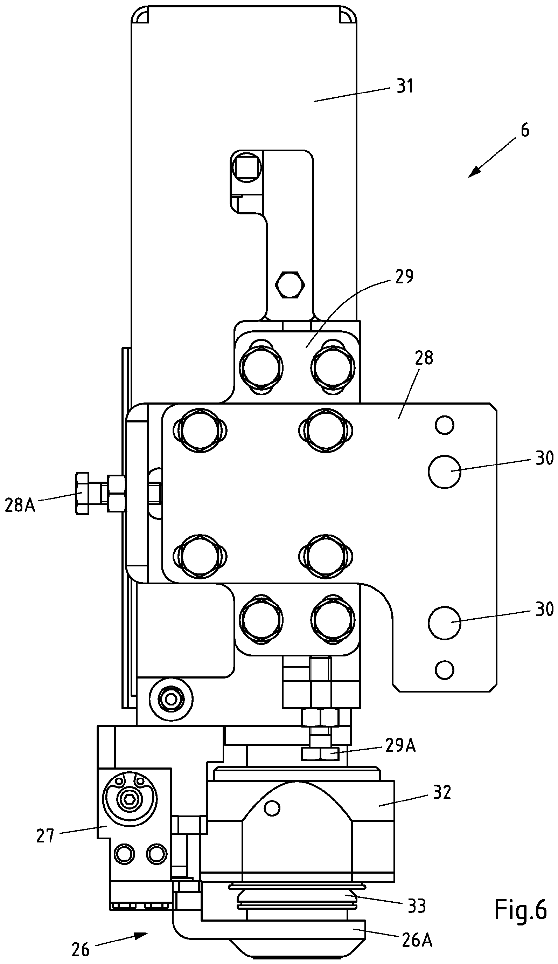

Fig. 6 zeigt die Greifeinrichtung 6 aus Fig. 5 in einer Seitenansicht, wobei die zuvor beschriebenen Langlöcher und Verschraubungen der horizontalen Justierplatte 28 und der vertikalen Justierplatte 29 und auch die Justierschrauben 28A und 29A gut erkennbar sind.

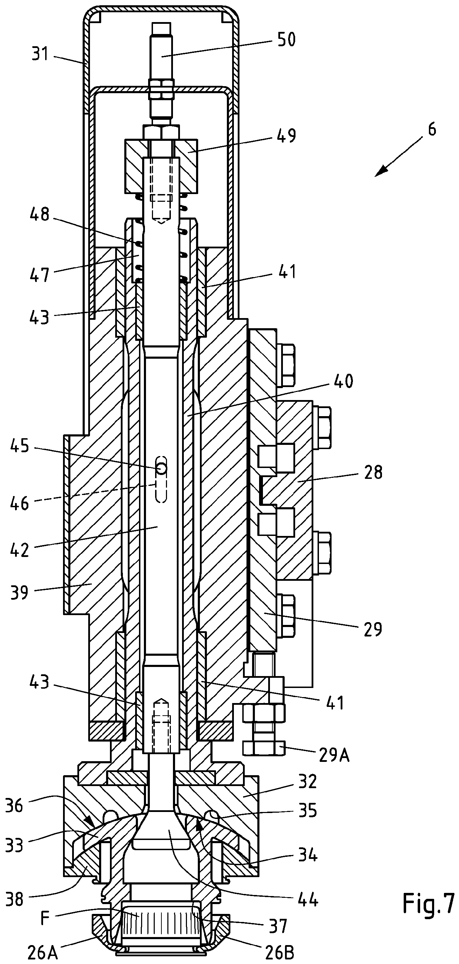

Fig. 7 zeigt einen Vertikalschnitt durch die Greifeinrichtung 6 entlang der Linie VII-VII aus Fig. 5. Man erkennt deutlich, dass die Greiferbacken 26A und 26B geschlossen sind und ein Ausgießelement F umschließen. Am unteren Ende der Greifeinrichtung 6 erkennt man einen Stützblock 32 mit dem darunter befindlichen Andrückkopf 33. Um die erfindungsgemäße Verschwenkbarkeit des Andrückkopfes 33 zu erreichen, ist der Stützblock 32 unten als Kugelschale 34 ausgebildet und der Andrückkopf 33 auf seiner Oberseite als korrespondierende Kugelkalotte 36. Man erkennt ferner, dass der Andrückkopf 33 oberhalb seines Hohlraums zur Aufnahme eines Ausgießelementes F eine umlaufende Schulter 37 aufweist.

Der Grundkörper 39 ist, wie bereits erläutert, mit der vertikalen Justierplatte 29 verschraubt. Im Inneren der vertikalen Bohrung im Grundkörper 39 ist zunächst ein Hohlstößel 40 erkennbar, welcher in einer oberen und unteren Lagerschale 41 gelagert ist und relativ zum Grundkörper 39 in vertikaler Richtung verschiebbar ist. Im Inneren des Hohlstößels 40 befindet sich wiederum ein Innenstößel 42, der ebenfalls in Lagerhülsen 43 am unteren und oberen Ende der mittigen Ausnehmung des Hohlstößels 40 vertikal verschiebbar gelagert ist. Am unteren Ende des Innenstößels 42 ist ein Verriegelungselement 44 gezeigt, welches sich nach unten hin konisch verbreitert.

Zur drehfesten Führung des Innenstößels 42 und zur Begrenzung der Axialbewegung des Hohlstößels 40 dient ein Stift 45, welcher in Langlöchern 46 des Hohlstößels 40 vertikal verschiebbar angeordnet ist. Am oberen Ende weist der Hohlstößel 40 einen Ringraum 47 zur Aufnahme einer Druckfeder 48 auf, welche den Hohlstößel 40 gegenüber einem Betätigungsarm 49 verspannt, auf den weiter unten noch näher eingegangen werden wird. Ganz oben im Gehäuse 31 erkennt man einen Stoßdämpfer 50.

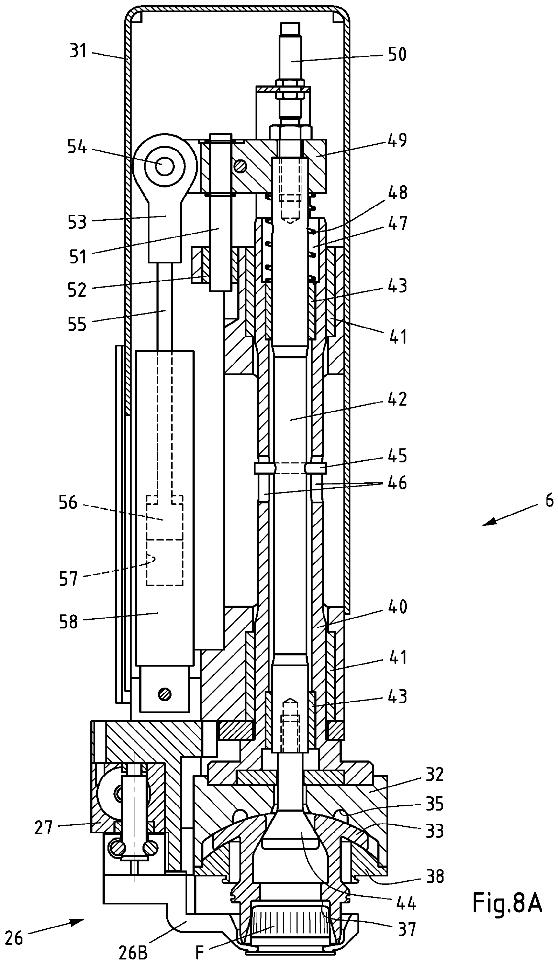

In Fig. 8A ist der Greifer aus Fig. 7 in einem dazu orthogonalen Vertikalschnitt entlang der Linie VIII-VIII in Fig. 5 dargestellt. Stützblock 32 und Andrückkopf 33 sind aufgrund der dargestellten und insoweit bevorzugten sphärischen Lagerung des Andrückkopfs 33 identisch zur Darstellung in Fig. 7. Links daneben erkennt man den Greifer 26 mit dem Antriebsgehäuse 27 und den - noch geschlossenen - Greiferbacken, von denen nur die hintere Greiferbacke 26B erkennbar ist. Fig. 8A zeigt ferner auch die genaue Ausbildung von Stift 45 des Innenstößels 42 und der beiden Langlöcher 46 im Hohlstößel 40. Darüber hinaus ist erkennbar, dass der bereits zur Fig. 7 beschriebene Betätigungsarm 49 auskragt und mittels einer Führungsachse 51 in einer Lagerhülse 52 am oberen Ende des Grundkörpers 39 vertikal verschiebbar gelagert ist.

Betätigt wird der Betätigungsarm 49 mittels eines Verbindungskopfes 53, welcher mittels eines Bolzens 54 mit dem Betätigungsarm 49 verbunden ist. Am unteren Ende weist der Verbindungskopf 53 einen Betätigungsarm 55 auf, welcher mit einem lediglich gestrichelt dargestellten Kolben 56, der in einem Zylinder 57 angeordnet ist in Verbindung steht. Die angedeutete Zylinder/Kolben-Einheit 56, 57 befindet sich dabei in einem Antriebsgehäuse 58. Man erkennt, dass der Kolben 56 sich in einer oberen Stellung befindet, so dass der Betätigungsarm 49 mittels des Innenstößels 42 das Verriegelungselement an seine obere Position bewegt hat. In dieser verriegelten Stellung wird der Andrückkopf 33 durch die konische Ausgestaltung des Verriegelungselements 44 einerseits und die entsprechend konische Ausgestaltung der sich nach oben verjüngenden Öffnung im Andrückkopf 33 zentriert gegen den Stützblock 32 gezogen, so dass sich der Andrückkopf 33 in einer horizontal ausgerichteten Stellung befindet. Beschrieben ist also eine Stellung, in dem die Greifeinrichtung 6 zuvor das Ausgießelement F, welches der Greifeinrichtung 6 horizontal ausgerichtet zugeführt wird, aufgenommen hat. Die Greiferbacken 26A und 26B sind in dieser verriegelten Stellung noch geschlossen.

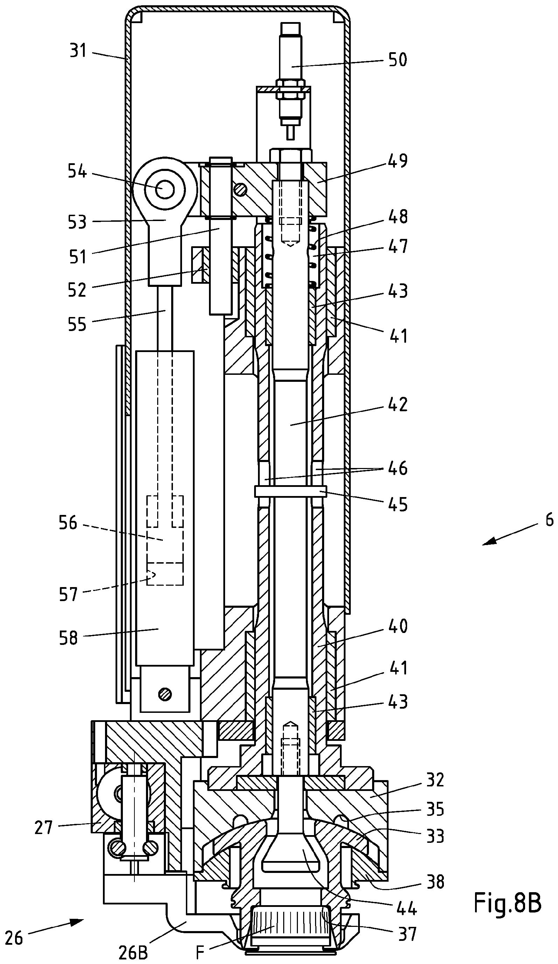

Fig. 8B zeigt nun die gleiche Darstellung wie in Fig. 8A, wobei jedoch das Verriegelungselement 44 entriegelt dargestellt ist, indem der Kolben 56 sich in einer unteren Stellung befindet und das Verriegelungselement über dem Betätigungsarm 49 und den Innenstößel 42 entgegen der Wirkung der Federkraft durch die Druckfeder 48 in entriegelter Stellung befinden. Diese Stellung entspricht der Situation nach dem Aufsetzen des Ausgießelements F auf die Giebelfläche der Packung, wobei durch die Entriegelung des Andrückkopfes 33 sich dieser aus seiner horizontalen Lage in die der tatsächlichen Packungssituation angepasste Lage verschieben kann.

Um die Reibung zwischen Stützblock 32 und Andrückkopf 33 zu reduzieren wird durch den Ringkanal 35 ein Luftstrom mit einem Druck eingetragen, der ausreicht, dass sich ein kleines Luftpolster zwischen Ringkalottenführung und zugehörigen Kugelschalenoberfläche ausbildet. Der Greifer 26 ist in Fig. 8B geöffnet, so dass die umlaufende Schulter 37 des Andrückkopfes 33 auf die Schraubkappe des Ausgießelements F drückt und so einen um den gesamten Umfang des Ausgießelements F gleichmäßig verteilten Anpressdruck ausübt, um eine gleichmäßige Verteilung des Klebstoffs und damit eine optimale Verklebung vom Ausgießelement F auf der Packungsoberfläche zu erreichen.

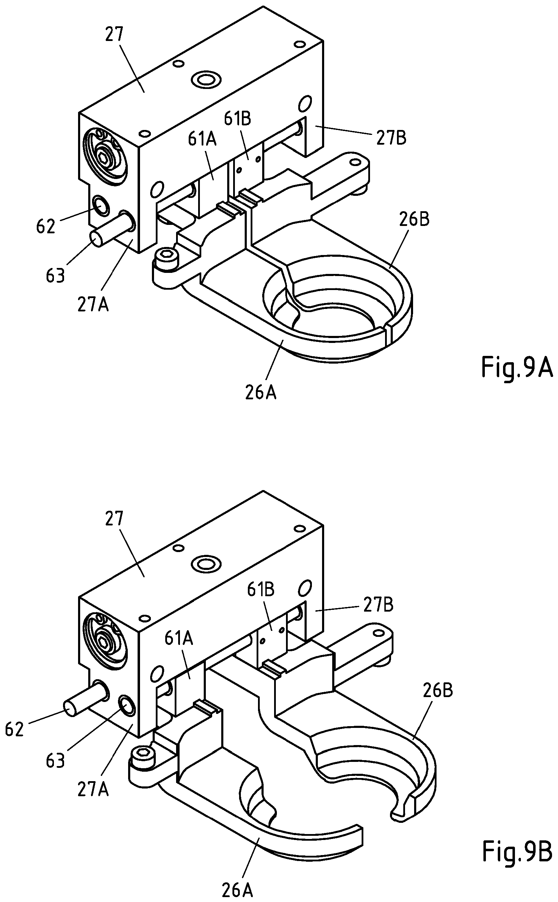

In den Fig. 9A und 9B ist das Kernstück eines Greifers 26 jeder Greifeinrichtung 6 näher dargestellt. Dort sind die Greiferbacken 26A und 26B in ihrer geschlossenen und geöffneten Stellung gezeigt. Im dargestellten und insoweit bevorzugten Ausführungsbeispiel sind die Greiferbacken 26A und 26B linear gegeneinander verfahrbar. Dazu weist jede Greifeinrichtung zunächst ein Gehäuse 27 auf, in der die Lagerung der Greiferbacken 26A und 26B untergebracht ist. Dazu weist das Gehäuse 27 an seinen Enden zwei nach unten reichende Schenkel 27A und 27B auf, und es sind am gehäuseseitigen Ende der Greiferbacken 26A ein Lagerblock 61A und an der Greiferbacke 26B ein entsprechender Lagerblock 61B vorgesehen. Der Lagerblock 61A ist dabei fest mit einer Führungsachse 62 und der Lagerblock 61B mit einer Führungsachse 63 verbunden. Dadurch, dass sich die Führungsachse 62 auch durch den Lagerblock 61B und die Führungsachse 63 auch durch den Lagerblock 61A erstrecken, sind auch diese Lagerblöcke 61A und 61B mit entsprechenden Lagern (nicht dargestellt) zur Führung der jeweils anderen Führungsachse versehen.

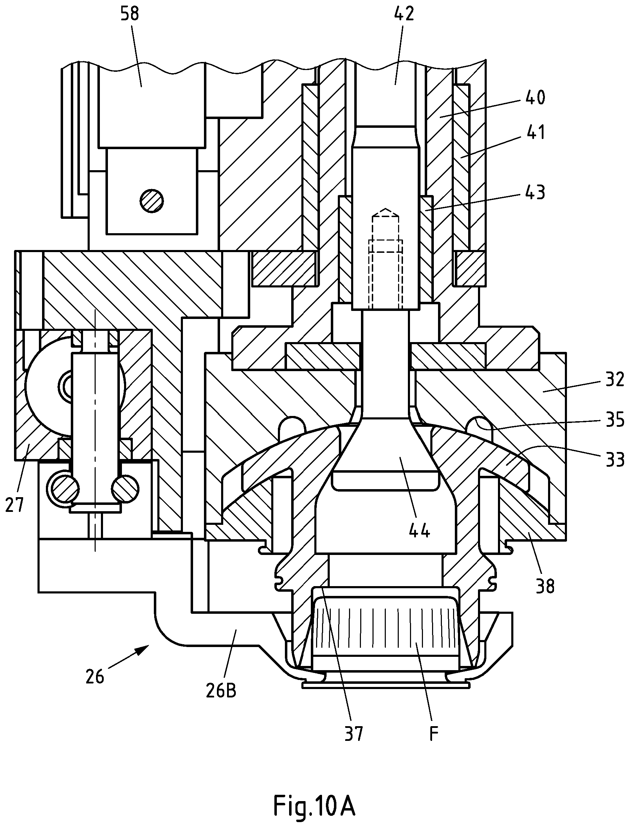

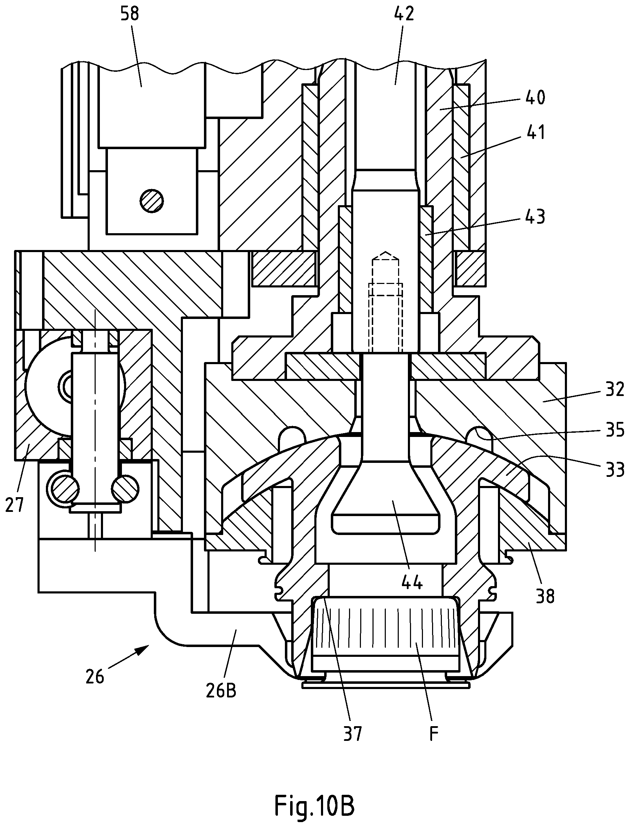

Zur besseren Verdeutlichung der Wirkungsweise von der Arretierung bzw. Entriegelung des Andrückkopfes 33 sind die unteren Bereiche der Greifeinrichtung 6 in den Fig. 10A und 10B analog zur Darstellung der Fig. 8A und 8B vergrößert dargestellt.

In der geöffneten Greiferstellung in Fig. 10B drückt dagegen der Andrückkopf 33 mit seiner Schulter 37 gegen die Schraubkappe des Ausgießelements F, wodurch das Ausgießelement F solange fest an die (nicht dargestellte) darunter befindliche Packung gedrückt wird, bis eine feste Verbindung erreicht ist, wonach die Greifeinrichtung 6 wieder angehoben wird und die mit dem Ausgießelement F versehene Packung P den Applikator 1 verlassen kann.

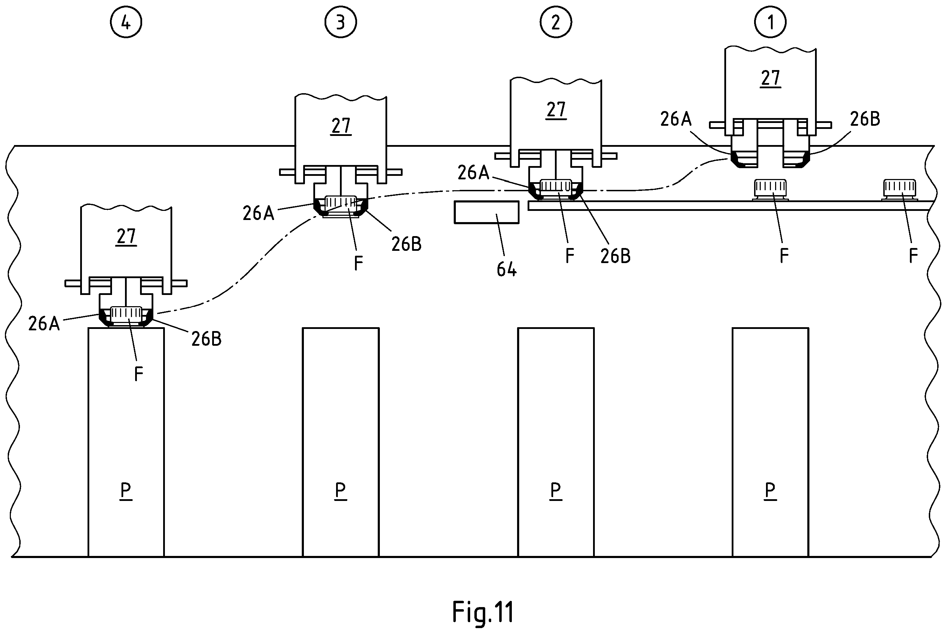

Schließlich zeigt Fig. 11 in schematischer Darstellung die Bewegung der Greifeinrichtung 6 beim Appliziervorgang. In seiner obersten Stellung, Position ①, in welcher die Greiferbacken 26A und 26B geöffnet sind, senkt sie sich zur Aufnahme eines unterhalb der Greifeinrichtung bereitgestellten Ausgießelements F ab und umgreift zunächst die Schraubkappe des Ausgießelements F, um dessen Transport nach der erfolgten Zwangsführung im Übergabebereich zu gewährleisten. Dabei schließen sich die Greiferbacken 26A und 26B und das Ausgießelement F wird in der Nut zwischen Schraubkappe und Flansch form- und kraftschlüssig ergriffen, wie in Position ② dargestellt. Danach bleibt es zunächst in der Höhe des Übergabebereichs und benetzt beim weiteren Transport die Unterseite des Befestigungsflansches des Ausgießelements F mit einem Klebstoff in einer nur angedeuteten Auftragsstation 64. Solche Auftragsstationen sind für sich beispielsweise aus der auf die Anmelderin zurückgehenden DE 100 17 609 A1 bekannt.

Danach beginnt die vertikale Verschwenkung der Greifeinrichtung 6 in Richtung der unterhalb der Greifeinrichtung 6 befindlichen Packung P. Hier ist zunächst eine etwas tiefere Position ③ in einer Zwischenstellung gezeigt. Die Greifeinrichtung 6 wird nun weiter nach unten verschwenkt bis in ihre unterste Stellung, in der das Ausgießelement F auf die Giebelfläche der Packung P appliziert wird, dargestellt als Position ④. Hier öffnen sich in einem nächsten (nicht dargestellten) Schritt die Greiferbacken 26A, 26B und der Flansch im Ausgießelement F wird vom Andrückkopf im optimalen und auf die jeweilige Situation angepassten Winkel auf die Giebelfläche der Packung P gedrückt.

Die Greifeinrichtung 6 verbleibt in dieser Applizierstellung im Applikator 1 und presst das Ausgießelement F so lange gegen den Giebel der Packung bis der Klebstoff getrocknet ist. Anschließend gibt sie das Ausgießelement F frei und verfährt wieder in ihre oberste Stellung, Position ①, um - nach einer Umdrehung des Applikators 1 - ein weiteres Ausgießelement F aufzunehmen. Dieser Vorgang wiederholt sich bei einer konstanten Drehbewegung des Applikators 1 für jede angebrachte Greifeinrichtung 6 während des Appliziervorgangs.

Zur besseren Übersicht wurde in der schematischen Darstellung in Fig. 6 auf eine Schrägstellung von Greifeinrichtung 6 und Ausgießelement F sowie des Packungsgiebels der Packungen P verzichtet. Des Weiteren sind zur Vereinfachung die Greiferbacken 26A und 26B um eine vertikale Achse 90° verschwenkt dargestellt, um die zunächst offene und anschließend geschlossene Stellung der Greiferbacken 26A und 26B zeigen zu können.

## Patentansprüche

1. Verfahren zum Applizieren von mittels einer Greifeinrichtung (6) eines Applikators (1) festgehaltenen, einen Flansch und eine Schraubkappe aufweisenden Ausgießelementen (F) auf Packungen (P), insbesondere Karton/Kunststoff-Verbundpackungen für gießfähige Produkte, wobei jedes Ausgießelement (F) der Greifeinrichtung (6) in einer ausgerichteten Lage zugeführt, von Greiferbacken (26A, 26B) eines Greifers (26) der Greifeinrichtung (6) ergriffen und von dieser mittels seinem Flansch auf eine Packung (P) appliziert und dort angepresst wird,
**gekennzeichnet durch** die folgenden Schritte:
- Ergreifen eines Ausgießelements (F) durch Schließen der Greiferbacken (26A, 26B),
- Absenken jeder Greifeinrichtung (6) mit ergriffenem Ausgießelement (F) auf eine darunter transportierte Packung (P) in eine Applizierposition,
- Andrücken des Flansches des Ausgießelements (F) auf die Packung (P) mittels eines Andrückkopfes (33) über eine vorgegebene Zeit in der Applizierposition, wobei der Andrückkopf (33) um einen vorgegebenen Winkelbereich frei im Raum beweglich ist und sich beim Andrücken an die jeweilige Ausformung des Packungsgiebels anpassen kann und dass der Mittelpunkt der gedachten Klebefläche unbeweglich bleibt und
- Anheben jeder Greifeinrichtung (6) zur Aufnahme eines neu zugeführten Ausgießelements (F).

2. Verfahren nach Anspruch 1,
**dadurch gekennzeichnet, dass**
vor dem Andrücken des Flansches des Ausgießelements (F) der Andrückkopf (33) der Greifeinrichtung (6) entriegelt wird.

3. Verfahren nach Anspruch 2,
**dadurch gekennzeichnet, dass**
der Andrückkopf (33) der Greifeinrichtung (6) nach seiner Entriegelung durch eine sphärische Lagerung um einen vorgegebenen Winkelbereich frei im Raum beweglich ist.

4. Verfahren nach Anspruch 3,
**dadurch gekennzeichnet, dass**
die Reibung der Kontaktflächen der sphärischen Lagerung durch ein Luftpolster minimiert wird.

5. Verfahren nach einem der Ansprüche 2 bis 4,
**dadurch gekennzeichnet, dass**
die Greifeinrichtung (6) eine Hochachse definiert und dass der Andrückkopf (33) der Greifeinrichtung (6) zur Arretierung exakt parallel zur Hochachse der Greifeinrichtung (6) ausgerichtet wird.

6. Verfahren nach einem der Ansprüche 1 bis 5,
**dadurch gekennzeichnet, dass**
der Flansch jedes Ausgießelements (F) nach dem Ergreifen von einer Auftragsstation (64) zum Benetzen des Flansches des Ausgießelements (F) mit einem Klebstoff benetzt wird.

7. Verfahren nach einem der Ansprüche 1 bis 5,
**dadurch gekennzeichnet, dass**
der Flansch jedes Ausgießelements nach dem Ergreifen von einer Aktivierstation zum Aktivieren des Kontaktbereiches des Flansches des Ausgießelements mittels Wärme, UV-Licht od. dgl. aktiviert wird.

8. Vorrichtung zum Applizieren von mittels einer Greifeinrichtung (6) eines Applikators (1) festgehaltenen, einen Flansch und eine Schraubkappe aufweisenden Ausgießelementen (F) auf Packungen (P), insbesondere Karton/Kunststoff-Verbundpackungen für gießfähige Produkte, wobei jedes Ausgießelement (F) der Greifeinrichtung (6) in einer ausgerichteten Lage zugeführt, von Greiferbacken (26A, 26B) eines Greifers (26) der Greifeinrichtung (6) ergriffen und von dieser mittels seinem Flansch auf eine Packung (P) appliziert und dort angepresst wird, wobei jede Greifeinrichtung (6) oberhalb der Greiferbacken (26A, 26B) wenigstens einen axial verschiebbaren Andrückkopf (33) aufweist, welcher beweglich an einem Stützblock (32) der Greifeinrichtung (6) angeordnet ist, dass der Andrückkopf (33) mittels einer Arretiervorrichtung in einer ausgerichteten Position arretierbar ist und, bei freigegebener Arretiervorrichtung, seine Kontaktfläche zum Anpressen des Ausgießelements (F) nach dessen jeweiliger Lage auf der Giebelfläche der Packung (P) auf die individuelle Ausrichtung des Ausgießelements (F) anpassen kann, um den eigentlichen Anpressdruck gleichmäßig auf das Ausgießelement (F), zur Sicherstellung einer gleichmäßigen Verbindung mit der Packungsoberfläche, zu übertragen,
**dadurch gekennzeichnet, dass**
der Andrückkopf (33) an seiner Oberseite als Kugelkalotte (36) ausgebildet ist und dass der Stützblock (32) eine korrespondierende Kugelschale (34) aufweist.

9. Vorrichtung nach Anspruch 8,
**dadurch gekennzeichnet, dass**
der Applikator (1) als Rundläufer ausgebildet ist.

10. Vorrichtung nach Anspruch 8 oder 9,
**dadurch gekennzeichnet, dass**
in der Kugelschale (34) ein Ringkanal (35) zum gleichmäßigen Einleiten von Luft zur Reduzierung der Reibung zwischen Kugelkalotte (36) und Kugelschale (34) vorgesehen ist.

11. Vorrichtung nach einem der Ansprüche 8 bis 10,
**dadurch gekennzeichnet, dass**
der Andrückkopf (33) im oberen Bereich der Kugelkalotte (36) eine umlaufende Schulter aufweist, welche in einem Ringspalt zwischen Kugelschale (34) und einem unter dem Stützblock (32) angeordneten Stützring (38) beweglich gelagert ist und dass dazu auch der Stützring (38) auf seiner Oberseite die Form einer Kugelkalotte aufweist.

12. Vorrichtung nach einem der Ansprüche 8 bis 11,
**dadurch gekennzeichnet, dass**
der Andrückkopf (33) mittels einer Arretiereinrichtung in einer zentrierten Lage feststellbar ausgebildet ist.

13. Vorrichtung nach Anspruch 12,
**dadurch gekennzeichnet, dass**
die Arretiereinrichtung ein in einen Hohlraum des Andrückkopfes (33) hineinragendes Verriegelungselement (44) aufweist, welches sich nach unten konisch verbreitert und dass der Hohlraum im Andrückkopf (33) sich korrespondierend nach oben hin konisch verjüngt.

14. Vorrichtung nach Anspruch 12 oder 13,
**dadurch gekennzeichnet, dass**
das Verriegelungselement (44) mittels eines Stößels von seiner arretierten Stellung in eine entriegelte Stellung verschiebbar ist, um die freie Schwenkbarkeit des Andrückkopfes (33) zu gewährleisten.

15. Vorrichtung nach Anspruch 14,
**dadurch gekennzeichnet, dass**
als Stößel ein in einem Grundkörper (39) der Greifeinrichtung (6) axial verschiebbarer Innenstößel (42) zur Arretierung bzw. Entriegelung des Andrückkopfes (33) vorgesehen ist.

16. Vorrichtung nach Anspruch 15,
**dadurch gekennzeichnet, dass**
der Innenstößel (42) in einem Hohlstößel (40) verschiebbar gelagert ist und dass der Hohlstößel (40) fest mit dem Stützblock (32) verbunden ist.

17. Vorrichtung nach Anspruch 16,
**dadurch gekennzeichnet, dass**
auch der Hohlstößel (40) im Grundkörper (39) axial verschiebbar gelagert ist.

18. Vorrichtung nach einem der Ansprüche 14 bis 17,
**dadurch gekennzeichnet, dass**
zur Betätigung der Stößel (40, 42) ein Betätigungsarm (49) vorgesehen ist, der fest mit dem Innenstößel (42) verbunden ist.

19. Vorrichtung nach Anspruch 18,
**dadurch gekennzeichnet, dass**
der Hohlstößel (40) gegen den Betätigungsarm (49) federbelastet vorgespannt ist.

## Claims

1. Method of applying pouring elements (F), fixed by means of a gripping device (6) of an applicator (1) and having a flange and a screw cap, onto packages (P), in particular cardboard/plastic composite packages for pourable products, wherein each pouring element (F) is supplied to the gripping device (6) in an aligned position, gripped by gripper jaws (26A, 26B) of a gripper (26) of the gripping device (6) and is applied by said gripping device (6) by means of its flange onto a package (P) and pressed on there, **characterised by** the following steps:
- gripping a pouring element (F) by closing the gripper jaws (26A, 26B),
- lowering each gripping device (6) with gripped pouring element (F) onto a package (P) transported therebelow into an application position,
- pressing the flange of the pouring element (F) onto the package (P) by means of a pressing head (33) for a predetermined time in the application position, wherein the pressing head (33) is freely movable in the spatial environment by a predefined angle range and can be adapted to the respective form of the package gable in the case of pressing and in that the middle point of the intended adhesive surface remains immovable and
- raising each gripping device (6) to receive a newly-supplied pouring element (F).

2. Method according to claim 1,
**characterised in that**
the pressing head (33) of the gripping device (6) is unlocked prior to pressing on the flange of the pouring element (F).

3. Method according to claim 2,
**characterised in that**
the pressing head (33) of the gripping device (6) after it is unlocked is freely movable in the spatial environment by a predefined angle range by way of a spherical mounting.

4. Method according to claim 3,
**characterised in that**
the friction of the contact surfaces of the spherical mounting is minimised by an air cushion.

5. Method according to any one of claims 2 to 4,
**characterised in that**
the gripping device (6) defines a vertical axis and **in that** the pressing head (33) of the gripping device (6) is aligned to lock exactly parallel to the vertical axis of the gripping device (6).

6. Method according to any one of claims 1 to 5,
**characterised in that**
the flange of each pouring element (F) is wetted with an adhesive after gripping by an application station (64) to wet the flange of the pouring element (F).

7. Method according to any one of claims 1 to 5,
**characterised in that**
the flange of each pouring element is activated by means of heat, UV light or the like after gripping by an activation station to activate the contact region of the flange of the pouring element.

8. Apparatus for applying pouring elements (F), fixed by means of a gripping device (6) of an applicator (1) and having a flange and a screw cap, onto packages (P), in particular cardboard/plastic composite packages for pourable products, wherein each pouring element (F) is supplied to the gripping device (6) in an aligned position, gripped by gripper jaws (26A, 26B) of a gripper (26) of the gripping device (6) and is applied by said gripping device by means of its flange onto a package (P) and pressed on there, wherein each gripping device (6) has at least one axially displaceable pressing head (33) above the gripper jaws (26A, 26B) which is movably arranged on a support block (32) of the gripping device (6), in that the pressing head (33) is lockable by means of a locking apparatus in an aligned position and, in the case of a released locking apparatus, its contact surface for pressing on the pouring element (F) can adapt to the individual alignment of the pouring element (F) according to its respective position on the gable surface of the package (P) in order to transfer the actual pressing force uniformly on the pouring element (F) to ensure a uniform connection to the package surface,
**characterised in that**
the pressing head (33) is designed on its upper side as a spherical calotte (36) and **in that** the support block (32) has a corresponding spherical shell (34).

9. Apparatus according to claim 8,
**characterised in that**
the applicator (1) is designed as a rotary machine.

10. Apparatus according to claim 8 or 9,
**characterised in that**
a ring channel (35) is provided in the spherical shell (34) to uniformly introduce air to reduce the friction between spherical calotte (36) and spherical shell (34).

11. Apparatus according to any one of claims 8 to 10,
**characterised in that**
the pressing head (33) has in the upper region of the spherical calotte (36) a circumferential shoulder which is movably mounted in a ring gap between spherical shell (34) and a support ring (38) arranged under the support block (32) and **in that** the support ring (38) to this end also has the shape of a spherical calotte on its upper side.

12. Apparatus according to any one of claims 8 to 11,
**characterised in that**
the pressing head (33) is designed so as to be fixable by means of a locking device in a centred position.

13. Apparatus according to claim 12,
**characterised in that**
the locking device has a locking element (44) protruding into a hollow space of the pressing head (33) which conically expands downwards and **in that** the hollow space in the pressing head (33) tapers correspondingly conically upwards.

14. Apparatus according to claim 12 or 13,
**characterised in that**
the locking element (44) is displaceable into an unlocked position from its locked position by means of a plunger in order to ensure the free pivotability of the pressing head (33).

15. Apparatus according to claim 14,
**characterised in that**
an inner plunger (42) axially displaceable in a base body (39) of the gripping device (6) for locking or unlocking the pressing head (33) is preferably provided as the plunger.

16. Apparatus according to claim 15,
**characterised in that**
the inner plunger (42) is displaceably mounted in a hollow plunger (40) and **in that** the hollow plunger (40) is fixedly connected to the support block (32).

17. Apparatus according to claim 16,
**characterised in that**
the hollow plunger (40) is also mounted so as to be axially displaceable in the base body (39).

18. Apparatus according to any one of claims 14 to 17,
**characterised in that**
an actuation arm (49) is provided to actuate the plungers (40, 42) which is fixedly connected to the inner plunger (42).

19. Apparatus according to claim 18,
**characterised in that**
the hollow plunger (40) is pretensioned in a spring-loaded manner against the actuation arm (49).

## Revendications

1. Procédé d'application d'éléments verseurs (F) maintenus au moyen d'un dispositif de préhension (6) d'un applicateur (1), comportant une bride et une capsule à vis, à des emballages (P), en particulier des emballages composites en carton/plastique pour produits coulants, chaque élément verseur (F) étant amené au dispositif de préhension (6) dans une position alignée, saisi par des mâchoires de préhension (26A, 26B) d'un préhenseur (26) du dispositif de préhension (6), et appliqué par lesdites mâchoires de préhension au moyen de sa bride à un emballage (P), et ledit élément verseur étant pressé sur celui-ci, **caractérisé par** les étapes suivantes :
- saisir un élément verseur (F) en fermant les mâchoires de préhension (26A, 26B),
- abaisser le dispositif de préhension (6) respectif avec l'élément verseur (F) saisi sur un emballage (P) transporté en dessous dans une position d'application,
- presser la bride de l'élément verseur (F) sur l'emballage (P) au moyen d'une tête de pression (33) pendant un temps prédéterminé dans la position d'application, la tête de pression (33) étant spatialement librement mobile dans une zone angulaire prédéterminée et ladite tête de pression, lors de la pression contre la forme respective de la surface supérieure de l'emballage, pouvant s'adapter et le centre de la surface adhésive imaginaire restant immobile et
- lever le dispositif de préhension (6) respectif pour recevoir un nouvel élément verseur (F) amené.

2. Procédé selon la revendication 1,
**caractérisé en ce que**
la tête de pression (33) du dispositif de préhension (6) est déverrouillée avant la pression de la bride de l'élément verseur (F).

3. Procédé selon la revendication 2,
**caractérisé en ce que**
la tête de pression (33) du dispositif de préhension (6) est spatialement librement mobile au moyen d'un palier sphérique dans une zone angulaire prédéterminée après son déverrouillage.

4. Procédé selon la revendication 3,
**caractérisé en ce que**
le frottement des surfaces de contact du palier sphérique est minimisé par un coussin d'air.

5. Procédé selon l'une des revendications 2 à 4,
**caractérisé en ce que**
le dispositif de préhension (6) définit un axe vertical et **en ce que** la tête de pression (33) du dispositif de préhension (6) est alignée exactement parallèlement à l'axe vertical du dispositif de préhension (6) pour le verrouillage.

6. Procédé selon l'une des revendications 1 à 5,
**caractérisé en ce que**
la bride de chaque élément verseur (F) est enduite de colle après avoir été saisie par un poste d'application (64) destiné à enduire la bride de l'élément verseur (F).

7. Procédé selon l'une des revendications 1 à 5,
**caractérisé en ce que**
la bride de chaque élément verseur est activée au moyen de chaleur, de lumière UV ou analogue après avoir été saisie par un poste d'activation destiné à activer la zone de contact de la bride de l'élément verseur.

8. Dispositif d'application d'éléments verseurs (F) maintenus au moyen d'un dispositif de préhension (6) d'un applicateur (1), comportant une bride et une capsule à vis, à des emballages (P), en particulier des emballages composites en carton/plastique pour produits coulants, chaque élément verseur (F) étant amené au dispositif de préhension (6) dans une position alignée, saisi par des mâchoires de préhension (26A, 26B) d'un préhenseur (26) du dispositif de préhension (6), et appliqué par lesdites mâchoires de préhension au moyen de sa bride à un emballage (P), et ledit élément verseur étant pressé sur celui-ci, chaque dispositif de préhension (6) comportant au-dessus des mâchoires de préhension (26A, 26B) au moins une tête de pression pouvant se déplacer axialement (33) qui est disposée de manière mobile sur un bloc de support (32) du dispositif de préhension (6) de telle sorte que la tête de pression (33) peut être verrouillée dans une position alignée au moyen d'un dispositif de verrouillage et, lorsque le dispositif de verrouillage est débloqué, sa surface de contact pour presser l'élément verseur (F) peut s'adapter selon la position respective de celui-ci sur la surface supérieure de l'emballage (P) à l'alignement individuel de l'élément verseur (F) afin de transférer uniformément la pression de contact réelle sur l'élément verseur (F) pour assurer une connexion uniforme avec la surface de l'emballage,
**caractérisé en ce que**
la tête de pression (33) est conçue sur sa face supérieure comme une calotte sphérique (36) et **en ce que** le bloc de support (32) comporte une coque sphérique (34) correspondante.

9. Dispositif selon la revendication 8,
**caractérisé en ce que**
l'applicateur (1) est conçu comme un dispositif rotatif.

10. Dispositif selon la revendication 8 ou 9,
**caractérisé en ce qu'**un
canal annulaire (35) est prévu dans la coque sphérique (34) pour l'introduction uniforme d'air afin de réduire le frottement entre la calotte sphérique (36) et la coque sphérique (34).

11. Dispositif selon l'une des revendications 8 à 10,
**caractérisé en ce que**
la tête de pression (33) comporte un épaulement circonférentiel dans la zone supérieure de la calotte sphérique (36), lequel épaulement est monté de manière mobile dans un espace annulaire entre la coque sphérique (34) et une bague de support (38) disposée sous le bloc de support (32) et **en ce qu'**à cet effet la bague de support (38) a également la forme d'une calotte sphérique sur sa face supérieure.

12. Dispositif selon l'une des revendications 8 à 11,
**caractérisé en ce que**
la tête de pression (33) est conçue de manière à pouvoir être bloquée en position centrée au moyen d'un dispositif de verrouillage.

13. Dispositif selon la revendication 12,
**caractérisé en ce que**
le dispositif de verrouillage comporte un élément de verrouillage (44) qui fait saillie dans une cavité de la tête de pression (33) et s'élargit coniquement vers le bas et **en ce que** la cavité de la tête de pression (33) se rétrécit de manière correspondante vers le haut selon une forme conique.

14. Dispositif selon la revendication 12 ou 13,
**caractérisé en ce que**
l'élément de verrouillage (44) peut être déplacé de sa position verrouillée à une position déverrouillée au moyen d'un poussoir pour assurer le libre pivotement de la tête de pression (33).

15. Dispositif selon la revendication 14,
**caractérisé en ce qu'**un
poussoir intérieur (42) déplaçable axialement dans un corps de base (39) du dispositif de préhension (6) est prévu comme poussoir pour verrouiller ou déverrouiller la tête de pression (33).

16. Dispositif selon la revendication 15,
**caractérisé en ce que**
le poussoir intérieur (42) est monté de manière à pouvoir se déplacer dans un poussoir creux (40) et **en ce que** le poussoir creux (40) est solidaire du bloc de support (32).

17. Dispositif selon la revendication 16,
**caractérisé en ce que**
le poussoir creux (40) est également monté dans le corps de base (39) de manière à pouvoir se déplacer axialement.

18. Dispositif selon l'une des revendications 14 à 17,
**caractérisé en ce qu'**un
bras d'actionnement (49) est prévu pour actionner le poussoir (40, 42), lequel bras d'actionnement est solidaire du poussoir intérieur (42).

19. Dispositif selon la revendication 18,
**caractérisé en ce que**
le poussoir creux (40) est précontraint par ressort contre le bras d'actionnement (49).
